# FASCICULE DE BREVET EUROPEEN

(11) **EP 1 200 276 B1**
(45) Date de publication et mention de la délivrance du brevet: **06.09.2006**
(21) Numéro de dépôt: 00956561.5
(22) Date de dépôt: 26.07.2000
(51) Int. Cl.: B60D 1/44, B60D 1/32

(54) **DISPOSITIF D'AMORTISSEMENT DES MOUVEMENTS DE LACET D'UNE REMORQUE ROUTIERE TRACTEE PAR UN VEHICULE A MOTEUR**
EINRICHTUNG ZUM DÄMPFEN DER SCHLINGERBEWEGUNG FÜR EINEN KRAFTFAHRZEUGGEZOGENNEN ANHÄNGER
DEVICE FOR DAMPING THE YAWING MOTIONS OF A HIGHWAY TRAILER DRAWN BY A MOTOR VEHICLE

(30) Priorité: 27.07.1999 FR 9909829
(43) Date de publication de la demande: 02.05.2002
(73) Titulaire: LOHR INDUSTRIE, 67980 Hangenbieten (FR)
(72) Inventeur: ANDRE, Jean-Luc, F-67210 Obernai (FR)
(74) Mandataire: Metz, Paul
(86) Numéro de dépôt international: PCT/FR2000/002152
(87) Numéro de publication internationale: WO 2001/007273

(56) Documents cités:
- CH-A- 675 858
- DE-A- 2 527 673
- DE-A- 3 741 820
- DE-A- 4 003 316
- DE-A- 4 441 307
- DE-U- 7 718 934
- FR-A- 2 044 031
- US-A- 3 749 420

## Description

L'invention se rapporte à un dispositif d'amortissement des mouvements de lacet de la remorque d'un ensemble routier composé d'un véhicule à moteur tractant une remorque, ce dispositif constituant en outre un moyen de sécurité en cas de rupture d'attelage.

Il est plus particulièrement destiné à améliorer la tenue de route d'un ensemble routier formé d'un véhicule à moteur tractant une remorque à essieux centraux appelée également remorque équilibrée.

On connaît les risques et les dangers liés aux mouvements de lacet des remorques routières dans des configurations notamment de descente à partir de certaines vitesses.

Ces risques peuvent aller jusqu'à provoquer le renversement de la remorque ou sa mise dans une position de biais dite en portefeuille.

Pour limiter l'amplitude des mouvements de lacet, de nombreux dispositifs existent déjà.

Il s'agit notamment de bras latéraux télescopiques avec effet d'amortissement. Ces bras sont montés de part et d'autre le long de l'attelage en étant rotulés par une de leurs extrémités sur l'arrière du véhicule et rotulés par l'autre extrémité sur l'attelage.

La présence de ces bras apporte une limitation suffisante pour les mouvements de petite amplitude mais le danger subsiste dans le cas de remorques de grandes dimensions et de poids en charge élevé.

Le but de l'invention est d'amortir et donc de limiter l'amplitude des mouvements de lacet de la remorque dans un ensemble routier formé d'un véhicule à moteur tractant une remorque. Les moyens selon l'invention peuvent constituer en plus un ensemble de sécurité formant momentanément une liaison d'attelage en cas de rupture de celui-ci.

Pour atteindre ce but, le dispositif d'amortissement comporte une piste curviligne d'amortissement rigide ou flexible sur laquelle agit un dispositif de friction monté à l'extrémité du timon, les deux extrémités de la piste se poursuivent chacune par une prolongation assurant la liaison articulée ou non avec une partie fixe de l'arrière du véhicule à moteur. Le dispositif de friction est constitué de structures planes de frottement amenées en contact de frottement avec les faces de la piste curviligne par un moyen moteur appliquant une force de rapprochement de ces structures. L'intensité de cette force de rapprochement est variable ce qui permet d'adapter l'amortissement en fonction des besoins. L'adaptation se réalise automatiquement et de manière simple, par un asservissement du moyen moteur aux suspensions pneumatiques de la remorque et/ou à la valeur de la vitesse de cet ensemble routier.

Dans le cas d'un ensemble routier ne comportant pas de suspensions pneumatiques; seule la vitesse est prise en compte ou l'on utilise un capteur spécifique pour obtenir le niveau de chargement de la remorque.

On connaît déjà un dispositif d'amortissement des mouvements de lacet, tel que celui décrit dans la demande FR 2 044 031 A, constitué d'un secteur de disque métallique et d'un étrier fixe sur le timon de la remorque et muni de deux patins de friction. Ces patins sont pressés fortement de part et d'autre du secteur de disque à l'aide d'un dispositif à force élastique engendrant ainsi un freinage par friction des mouvements de pivotement du timon par rapport au véhicule tracteur pour limiter les mouvements de lacet de la remorque.

A l'usure près, l'amortissement réalisé par ce système présente une intensité prédéterminée qui ne dépend que de la force exercée par la force élastique sur les patins de friction et par là sur la piste en secteur.

On connaît également, par les demandes DE 25 27 673 A (divulguant toutes les caractéristiques du préambule de la revendication 1), DE 77 18 934 U, et CH 675 858 A, des dispositifs similaires dans lesquels la force de rapprochement des éléments de friction est réglable.

Avec le dispositif d'amortissement selon l'invention, la force de rapprochement des structures de frottement contre la piste curviligne n'est pas constante. Elle varie pour rendre l'intensité de l'amortissement des mouvements de lacet fonction de la charge portée par la remorque et/ou de la vitesse. On sait que, plus le chargement transporté par la remorque est lourd, plus facilement les mouvements de lacet apparaissent et plus ils sont dangereux car l'inertie de la remorque augmente. Le dispositif selon la présente invention permet avantageusement d'augmenter l'effet de l'amortissement dans cette situation. En effet, plus la remorque est chargée, plus les suspensions sont sollicitées et plus le dispositif amortisseur rapproche les structures de frottement de la piste curviligne, augmentant ainsi la friction.

En revanche lorsque la remorque est vide ou peu chargée, l'inertie de la remorque diminue. Dans ce cas, un amortissement plus faible est suffisant. Les suspensions sont moins sollicitées et le dispositif selon la présente invention asservi aux suspensions réduit alors la force de rapprochement exercée sur les structures de frottement diminuant ainsi la friction et donc l'intensité de l'amortissement. Ces variations sont obtenues de manière simple, rapide et de façon totalement automatique.

On sait également que la vitesse aggrave les mouvements de lacet. On prendra donc en compte les valeurs de la vitesse et celles de la pression des suspensions pour réaliser un asservissement amélioré.

On peut également limiter les mouvements de lacet en utilisant l'une ou l'autre de ces grandeurs variables. Bien entendu, si les suspensions sont d'un autre type, la commande pneumatique n'est plus possible et si l'on veut prendre en compte le niveau de chargement il faut utiliser un capteur spécifique.

Cette adaptation de l'intensité de l'amortissement en fonction du poids tracté et/ou en fonction de la vitesse, permet de diminuer l'usure des structures de frottement et ainsi de prolonger la durée de vie du dispositif.

De la même façon, l'intensité de l'amortissement peut varier en plus automatiquement en fonction des contraintes routières, c'est-à-dire des difficultés de terrain rencontrées par le véhicule et des contraintes de roulage : accélérations, freinage, force centrifuge.... .

Le dispositif selon l'invention présente un avantage supplémentaire : grâce à la constitution de l'organe de pincement, la maintenance du dispositif est grandement facilitée, par exemple le remplacement des plaquettes de friction ainsi que l'attelage et le dételage de la remorque. Avec le système d'amortissement de l'art antérieur, pour réaliser les opérations de démontage et de montage nécessaires, il fallait lutter contre une force élastique permanente de rappel en rapprochement, celle d'un ressort par exemple. Avec le dispositif selon l'invention, il suffit d'annuler la pression de pincement pour pouvoir effectuer ces opérations sans effort.

De plus, dans le cas de l'utilisation d'un moyen pneumatique pour générer la force de rapprochement des structures de frottement, l'invention permet de compenser automatiquement le jeu dû à l'usure des structures de frottement par une pression adaptée appliquée à l'actionneur pneumatique.

Dans ce dernier cas, l'énergie fluidique pneumatique porte déjà en elle une certaine progressivité ou une moindre brutalité dans l'application des forces en raison même de l'effet pneumatique qui accompagne chaque action.

D'autres caractéristiques et avantages de l'invention apparaîtront dans la description qui suit, donnée à titre d'exemple non limitatif en référence au dessin dans lequel :

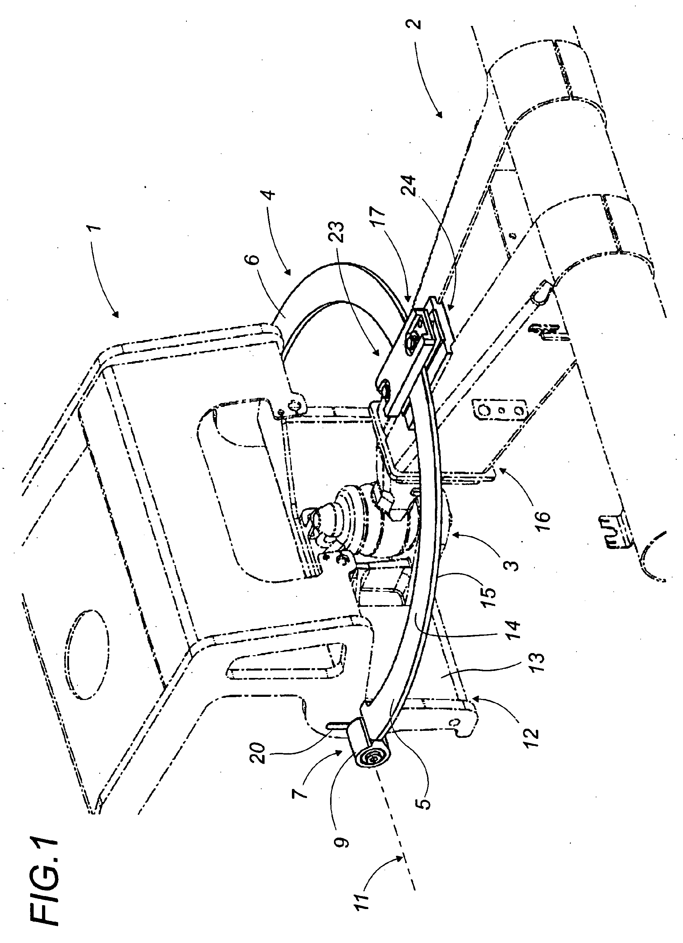

- la figure 1 est une vue générale en perspective de dessus et en oblique de l'arrière du véhicule à moteur et de l'attelage de la remorque équipés du dispositif amortisseur des mouvements de lacet selon l'invention ;

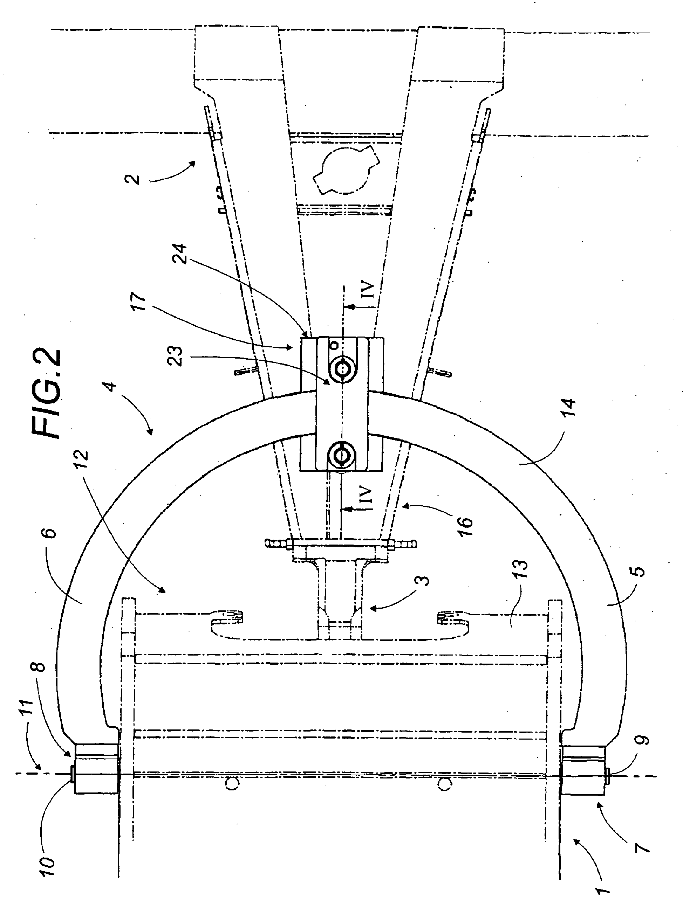

- la figure 2 est une vue en plan représentant l'arrière du véhicule moteur et l'attelage équipés du dispositif amortisseur des mouvements de lacet selon l'invention ;

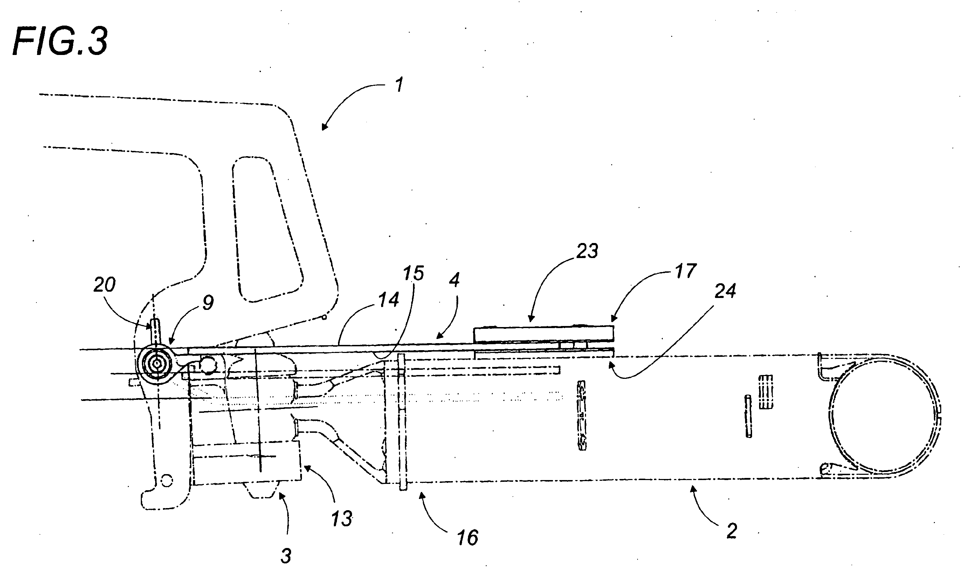

- la figure 3 est une vue de profil représentant l'arrière du véhicule à moteur et l'attelage équipés du dispositif amortisseur des mouvements de lacet selon l'invention ;
- la figure 4 est une coupe transversale, suivant la ligne de coupe IV-IV de la figure 2, d'un mode de réalisation du dispositif amortisseur selon l'invention ;
- la figure 5 est un schéma explicatif simplifié du circuit pneumatique de commande du dispositif amortisseur des mouvements de lacet illustrant sa liaison directe au circuit pneumatique des suspensions de la remorque ;
- la figure 6 est un schéma explicatif du circuit pneumatique de commande du dispositif amortisseur de lacets illustrant son asservissement au circuit pneumatique des suspensions de la remorque au moyen d'un capteur de pression avec prise en compte de la vitesse par un capteur de vitesse.

Le dispositif amortisseur des mouvements de lacet se monte sur la partie arrière 1 du châssis ou de la carrosserie d'un véhicule à moteur accouplé à une remorque par un timon 2 articulé à un ensemble mécanique appelé classiquement crochet d'attelage 3. Le dispositif amortisseur se compose d'une piste d'amortissement 4 de forme curviligne, de préférence en arc de cercle, centrée sur le crochet d'attelage 3. La piste d'amortissement 4 est du type plaque métallique rigide ou lame flexible c'est-à-dire suffisamment souple pour être déformée et revenir dans sa position et son état initial après une sollicitation. La piste se poursuit à chacune de ses extrémités par des prolongations de liaison 5 et 6 avec la partie arrière du châssis sur laquelle elle est montée. Conformément à la réalisation représentée, le support de piste se termine par des extrémités libres respectivement 7 et 8 articulées chacune à une partie fixe par une articulation de pivotement 9 ou 10 procurant au moins un mouvement de pivotement autour d'un axe 11 transversal à l'axe longitudinal du véhicule à moteur.

Selon une réalisation à piste flexible, les extrémités de la piste sont fixées au châssis et les déformations de celles-ci permettent d'absorber les mouvements de roulis et de tangage.

De façon préférentielle, on utilisera dans la réalisation à articulations de liaison 9 et 10 des rotules afin de procurer plusieurs degrés de liberté et d'absorber les mouvements de tangage en combinaison avec les mouvements de roulis ou on autorisera par tout moyen approprié un débattement de tangage suffisant de l'axe de pivotement.

Le montage d'articulation par les extrémités du support de la piste d'amortissement 4 est réalisé sur un bloc constructif 12 fixe par rapport au châssis du véhicule à moteur par exemple, mais non limitativement, sur un bloc mécanique 13 sur lequel est monté le crochet d'attelage 3.

Conformément à la réalisation représentée, cette piste d'amortissement 4 est une plaque ou une lame plus ou moins épaisse d'un matériau flexible, par exemple métallique, disposée couchée, c'est-à-dire à plan parallèle au timon, lame dont au moins la partie utile est conformée en arc de cercle. Elle présente deux faces planes de frottement l'une supérieure 14 et l'autre inférieure 15. Cette piste d'amortissement s'étend de part et d'autre du timon 2 et le croise, par exemple par le dessus à proximité de son extrémité avant 16. Dans la partie supérieure de l'extrémité avant 16 du timon 2 est logé un dispositif de friction 17 dont la fonction est de réaliser l'amortissement des mouvements de lacet par l'appui des faces frontales planes 18 et 19 de patins de frottement 21 et 22 contre les faces respectivement 14 et 15 de la piste d'amortissement 4 par l'effet d'une ou de plusieurs force(s) de rapprochement par exemple pneumatique(s).

On peut imaginer également de rapporter ou de disposer d'une autre manière des surfaces de frottement sur les faces 14 et 15 de la piste 4 ou de revêtir les faces dé cette piste d'amortissement d'un enduit de friction.

Pour assurer un bon fonctionnement, c'est-à-dire garantir l'efficacité du contact des faces planes des patins de frottement contre les faces planes de la piste d'amortissement 4, le plan défini par celle-ci est sensiblement parallèle au plan-support sur lequel est fixé le dispositif de friction 17.

Concernant la liaison entre la piste d'amortissement 4 et le châssis, une fente 20 perpendiculaire à l'axe 11 de pivotement, située au-dessus de chacune des articulations 9 et 10, peut éventuellement être prévue par mesure de sécurité. En cas de mouvements de roulis importants, lors de dévers par exemple, les axes des articulations 9 et 10 peuvent coulisser dans les fentes 20 et ainsi se positionner à des hauteurs différentes l'un de l'autre.

Préférentiellement, le crochet d'attelage devrait se trouver le plus près possible du plan défini par la piste d'amortissement.

Bien que l'énergie pneumatique soit celle préférée dans le cadre de la présente invention pour l'actionnement du dispositif de friction, il doit être bien compris que tous les types d'énergies notamment fluidiques, mais aussi les autres par exemple l'énergie électrique sont visés.

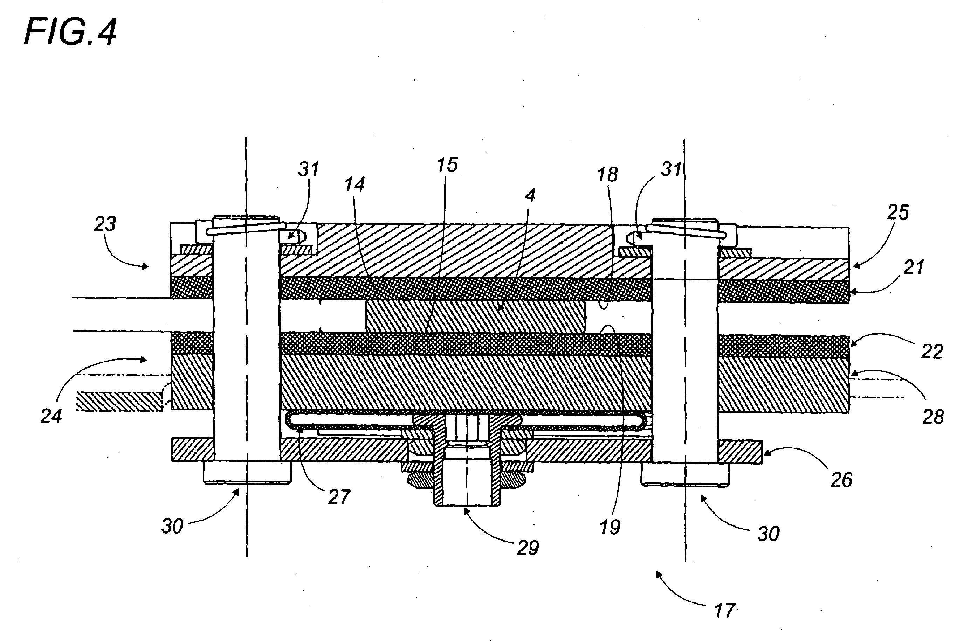

On va décrire maintenant de façon détaillée le dispositif de friction 17 du mode de réalisation de l'invention représenté sur la figure 4. Il s'agit-d'un dispositif de friction à énergie pneumatique.

Le dispositif de friction 17, logé dans la flèche du timon 2, comporte une succession d'éléments superposés disposés de part et d'autre de la piste d'amortissement 4. Ce dispositif de friction 17 est du type à mâchoires 23 et 24 portant des patins de frottement supérieur 21 et inférieur 22, par exemple des plaquettes de frottement.

La mâchoire supérieure 23 est constituée sur sa face extérieure d'une plaque de fermeture 25 et sur sa face intérieure du patin de frottement 2-1. La mâchoire inférieure 24 comporte plus d'éléments. Elle comprend aussi une plaque de fermeture 26 sur son bord extérieur et un patin de frottement 22 sur son bord intérieur. Un actionneur pneumatique 27 est disposé en dessous d'une plaque de répartition 28 en contact avec le patin inférieur 22.

Sous l'effet de la pression, l'actionneur pneumatique 27 exerce contre la plaque de répartition 28 une force dirigée vers le haut, qui est transmise au patin inférieur 22 recouvrant la plaque de répartition 28. Cette force provoque le rapprochement du patin inférieur 22 vers, et l'applique contre, la surface 15 de la piste d'amortissement 4. La piste d'amortissement 4 se trouve alors pincée entre les deux patins de frottement 21 et 22. En cas de mouvements de lacet, les mouvements relatifs de la piste d'amortissement 4 par rapport au timon sont amortis par la friction entre les surfaces 14, 15 de la piste d'amortissement et celles 18, 19 des patins de friction.

La plaque de répartition 28 permet de répartir la force générée par l'actionneur pneumatique 27 sur le patin inférieur 22 afin d'en améliorer l'efficacité et de rendre son usure uniforme, le patin étant une pièce relativement fragile.

L'actionneur pneumatique 27 représenté est un soufflet pneumatique à une seule chambre à air, raccordée à l'air comprimé par un orifice d'entrée-sortie 29. La pression de l'air comprimé dilate la chambre provoquant une poussée vers le haut sur la plaque inférieure, engendrant ainsi le rapprochement des surfaces de friction. L'actionneur pneumatique peut évidemment être différent de celui représenté sans pour autant sortir du cadre de l'invention. Il peut s'agir par exemple d'un soufflet du type de celui utilisé pour les suspensions ou d'une chambre à air quelconque telle qu'une manche utilisée par les pompiers ou un tube flexible plat. On peut imaginer également des variantes de l'invention utilisant un autre type d'actionneur pneumatique par exemple sous la forme d'un vérin pneumatique.

Selon une autre variante, la force pneumatique peut être appliquée non plus sur la surface de frottement inférieure, mais sur la surface de frottement supérieure et tendre à la rapprocher de la piste d'amortissement 4.

Les composants du dispositif de friction 17 sont maintenus ensemble plaqués l'un contre l'autre par un ou plusieurs éléments de fixation tels que des tiges d'assemblage 30 réalisant le blocage-arrêt de la plaque de fermeture supérieure 25 par des rondelles d'appui immobilisées contre la plaque supérieure par des goupilles de butée 31 à anneau de sécurité. Sous l'effet moteur de la pression pneumatique, la plaque supérieure 25 bute contre ces rondelles d'appui.

Lorsque l'épaisseur des patins 21 et 22 diminue, en raison de l'usure, la friction de ceux-ci sur la piste d'amortissement 4 pourrait devenir moins importante. Cependant, grâce au dispositif pneumatique selon l'invention, l'usure est compensée automatiquement car la pression n'évolue pas avec l'usure. En comparaison aux systèmes classiques, où un réglage mécanique de resserrement des moyens de fixation est nécessaire, cette opération est ici permanente et automatique.

Lorsque l'usure des patins 21 et 22 devient trop importante nécessitant leur remplacement, la maintenance du dispositif de friction 17 selon la présente invention est grandement facilitée par rapport à celle d'un dispositif classique. En effet, il suffit de dégonfler l'actionneur pneumatique 27 pour annuler la force de rapprochement entre les différents éléments et pouvoir aisément extraire les patins de friction en travaillant par le dessus. Avec un système classique, ces opérations de montage et de démontage sont rendues plus difficiles par la force élastique permanente de rappel en rapprochement.

Selon une caractéristique essentielle de l'invention, l'actionneur pneumatique 27 est relié au circuit pneumatique des suspensions de la remorque et/ou du camion par exemple directement par piquage sur la ligne d'alimentation de celles-ci ou par l'intermédiaire d'un circuit d'asservissement comprenant au moins un capteur de pression placé dans le circuit des suspensions de la remorque et/ou du camion et un module de commande. La pression du fluide de pincement à l'intérieur de l'actionneur pneumatique 27, peut ainsi varier en fonction des caractéristiques des suspensions traduisant l'état de charge de la remorque ou du camion ou des deux à la fois. Ceci permet avantageusement une adaptation automatique et permanente de l'amortissement des mouvements de lacet en fonction notamment du poids de la remorque.

Il est important de mentionner que les valeurs de vitesse du véhicule sont également prises en compte soit alternativement à la place des valeurs de pression dans les suspensions soit conjointement avec celles-ci.

Les valeurs de vitesse peuvent être prises en compte à partir des plus faibles ou seulement à partir d'un seuil pour augmenter l'amortissement à partir de ce seuil.

A cet effet un capteur spécial est prévu sur la remorque et/ou sur le camion ou l'on utilise un circuit existant sur le camion procurant déjà les valeurs de vitesse par exemple celles fournies par le circuit de contrôle de freinage dit ABS.

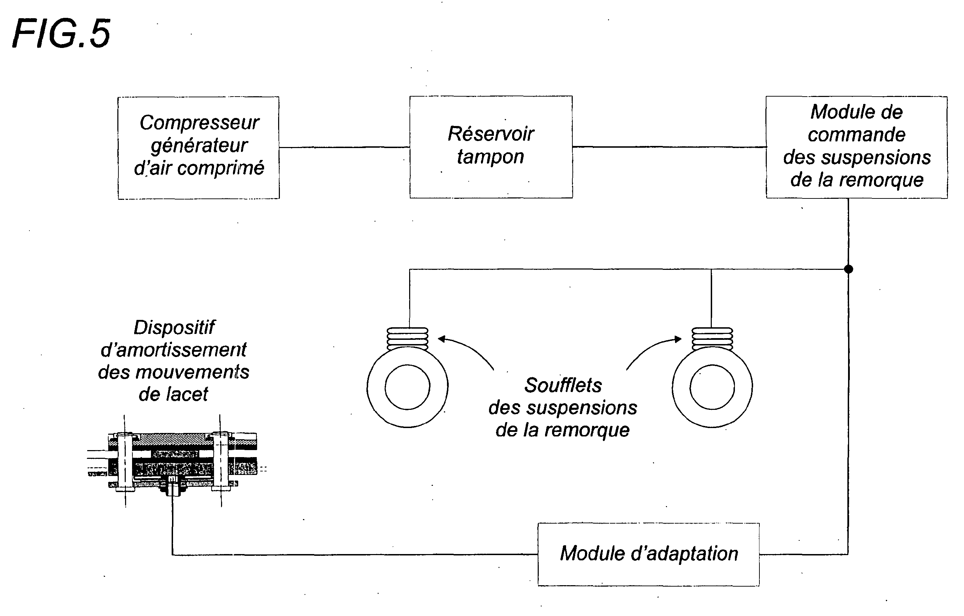

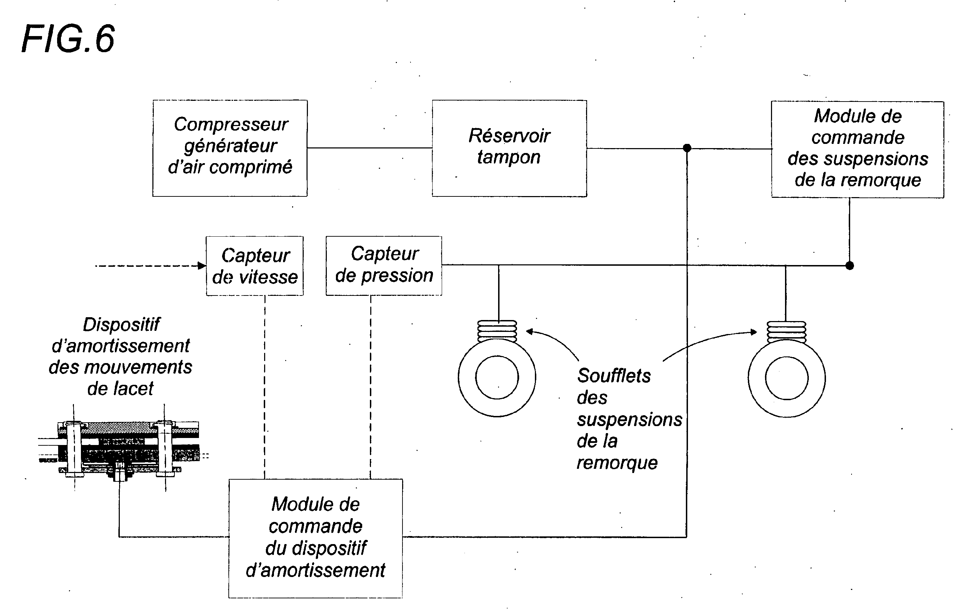

Deux exemples de réalisation du circuit de commande du dispositif d'amortissement sont illustrés schématiquement par les figures 5 et 6.

Les suspensions pneumatiques d'une remorque sont alimentées en air comprimé par un compresseur à travers un réservoir tampon, puis un module de commande et de contrôle.

Sur les figures 5 et 6 on a représenté schématiquement les suspensions par des soufflets et les modules et les capteurs par des rectangles.

Selon la variante de base représentée sur la figure 5, l'air comprimé servant à la commande de l'actionneur pneumatique 27 est pris par piquage sur la conduite d'alimentation des suspensions et envoyé au dispositif d'amortissement par exemple à travers un module d'adaptation. L'air comprimé sert de fluide moteur à l'actionneur pneumatique 27 dans lequel il pénètre par l'orifice 29. L'effet de l'amortissement en résultant dépend de la pression pneumatique instantanée dans la conduite alimentant les suspensions.

L'air comprimé peut être pris également sur le circuit pneumatique du véhicule à moteur ou camion.

Le montage de cette variante de base constitue une forme d'asservissement primaire suffisant pour rendre le travail d'amortissement dépendant des sollicitations des suspensions pneumatiques de la remorque et/ou du camion traduisant l'état de charge de celle-ci ou de ceux-ci. Ainsi, lorsque le poids de la remorque et/ou du camion augmente, la pression dans l'actionneur pneumatique 27 augmente également, renforçant le pincement et donc l'amortissement.

De façon préférentielle dans cette réalisation, les soufflets de suspension de la remorque et l'actionneur pneumatique 27 sont en équipression.

Selon la deuxième variante représentée, l'amortissement s'effectue par une véritable boucle d'asservissement conformément à l'exemple de montage représenté sur la figure 6.

On remarque sur ce montage que l'alimentation en fluide pneumatique sous pression du dispositif d'amortissement provient directement de la source d'air comprimé par un piquage en aval du réservoir tampon. La ligne principale d'air comprimé alimente le dispositif d'amortissement à travers un module de commande fonctionnant à partir des valeurs ou de l'état d'un capteur de pression monté sur la ligne d'alimentation en air comprimé des suspensions de la remorque et/ou du camion. Le capteur de pression est un transducteur ou tout autre moyen sensible à la pression à partir duquel ou de l'exploitation duquel on peut piloter un module de commande de l'énergie pneumatique arrivant sur le dispositif d'amortissement. La commande de ce dispositif d'amortissement est ainsi fonction du travail et de l'état des suspensions de la remorque et/ou de celles du camion.

Selon une variante intéressante, au capteur de pression est adjoint un capteur de vitesse du véhicule permettant de tenir compte des valeurs de la vitesse dans la loi de l'effort de pincement appliqué aux plaquettes de friction.

Selon une autre variante, le dispositif d'amortissement peut être commandé uniquement à partir du capteur de vitesse.

Le circuit pneumatique peut comporter d'autres éléments non représentés, par exemple un calculateur effectuant la moyenne de la pression dans les deux soufflets de suspension pour déterminer la pression de fluide de pincement à envoyer dans le dispositif d'amortissement. En effet, la pression peut être différente dans les deux suspensions, notamment en cas de dévers.

On peut imaginer un mode de réalisation du dispositif selon l'invention dans lequel l'actionneur pneumatique 27 serait alimenté en fluide moteur de pincement par une source indépendante du circuit des suspensions mais où la pression du fluide serait calculée en fonction de paramètres relatifs à ce circuit.

On peut aussi imaginer d'utiliser une autre énergie ou un autre fluide que l'air comprimé comme moyen moteur de pincement par exemple un fluide hydraulique ou une énergie électrique.

De nombreuses autres variantes sont envisageables. On peut par exemple introduire un réglage supplémentaire de la pression du fluide de pincement piloté par l'utilisateur ou bien dépendant de caractéristiques particulières instantanées des paramètres de roulage et notamment de l'amplitude des lacets en plus des valeurs de la vitesse.

La loi de l'effort de pincement peut être telle que l'intensité de la force appliquée soit inversement proportionnelle à l'écart angulaire entre la direction d'alignement de l'axe longitudinal du véhicule à moteur et celle de l'axe longitudinal de la remorque.

Bien entendu, dans ce cas, il s'avère préférable que cette force n'entre pas en action dans les virages pour laisser le timon totalement libre en mouvement.

A cet effet, on peut imaginer une forme de réalisation selon laquelle l'épaisseur de la piste d'amortissement 4 est variable, par exemple plus forte dans sa partie centrale pour diminuer vers ses extrémités. L'alternative inverse à savoir une épaisseur plus faible au centre peut également être utilisée.

Diverses variantes constructives et technologiques peuvent également être imaginées pour la réalisation de la piste d'amortissement 4, du dispositif de friction 17 et du montage de l'ensemble au niveau de l'extrémité avant 16 du timon 2.

On peut envisager en particulier de constituer un tout mécanique fonctionnel sous la forme d'un bloc constructif unique selon lequel sont rassemblés au niveau de l'extrémité avant 16 du timon 2, la piste 4 d'amortissement et ses prolongations 5 et 6 terminées chacune par une articulation de liaison 9 et 10, ou une liaison directe de fixation et le dispositif de friction 17 fixé ou à fixer sur l'extrémité avant 16 du timon 2.

Selon une variante additionnelle, les articulations de liaison 9 et 10 sont réunies entre elles par une traverse de liaison (non représentée) qui porte des moyens de fixation, par exemple amovibles, sur une partie fixe à l'arrière du véhicule à moteur.

Ainsi, en prévoyant une fixation amovible de cette traverse de liaison avec le châssis du véhicule à moteur ou avec une plaque solidaire de ce châssis, on peut monter, attacher, accrocher, en appui ou autrement relié, le dispositif selon l'invention déjà monté sur l'extrémité avant du timon à l'arrière du véhicule à moteur à chaque fois et en même temps que l'on accouple la remorque.

En ce qui concerne la lame en arc de cercle constituant sur une partie de sa longueur la piste d'amortissement 4, celle-ci présentera de préférence les caractéristiques suivantes.

Le rayon de l'arc de cercle est choisi techniquement le plus grand possible procurant ainsi les avantages d'une force de friction moindre pour un même couple d'amortissement. Cette moindre force de friction permet de diminuer l'usure des surfaces de friction engendrant de plus faibles frais de maintenance et prolongeant la période d'efficacité du dispositif de friction. Des considérations relatives à l'esthétique et à la position du dispositif de friction sur le timon peuvent également entrer en ligne de compte dans le choix de ce rayon.

De préférence, la lame est d'épaisseur réduite pour lui conférer plus de souplesse et donc d'aptitude à la déformation par exemple par torsion.

Par ailleurs, la lame doit pouvoir débattre radialement, c'est-à-dire pouvoir se déplacer longitudinalement par rapport au timon 2 lors des ruptures de pente de la route et occuper des positions éloignées ou rapprochées correspondant aux pentes montantes ou descendantes.

Ceci peut se traduire par de plus grandes dimensions longitudinales des mâchoires du dispositif de friction 17.

Le dispositif par exemple pneumatique d'amortissement des mouvements de lacet selon l'invention forme un ensemble de moyens apportant une sécurité supplémentaire en cas de rupture d'attelage au niveau du crochet d'attelage.

En effet, si la liaison mécanique est rompue au niveau du crochet d'attelage, la piste curviligne d'amortissement 4 dont le support est monté pivotant à l'arrière du véhicule moteur, assure momentanément la liaison mécanique entre le véhicule à moteur et la remorque.

## Revendications

1. Dispositif d'amortissement des mouvements de lacet de la remorque d'un ensemble routier composé d'un véhicule et d'une remorque tractée par ce véhicule, présentant au voisinage de l'extrémité avant (16) du timon (2) un ensemble d'amortissement utilisant la friction en tant qu'effet amortisseur et formé des moyens suivants :
. une piste d'amortissement (4) curviligne, centrée sur le crochet d'attelage (3) mais distincte de ce dernier, la piste d'amortissement (4) ou son support étant relié(e) de façon à absorber le roulis et le tangage à un support solidarisé à l'arrière du véhicule tracteur ou à un support intermédiaire à monter sur une partie fixe à l'arrière du véhicule ;
. un dispositif de friction (17), solidaire du timon (2), comportant des structures de frottement (21, 22) forcées en appui contre les faces de la piste d'amortissement (4) par un actionneur (27) pour, en dégradant l'énergie par frottement sur la piste (4), obtenir un effet d'amortissement des mouvements de lacet ;
. l'actionneur (27) agissant sur les structures de frottement est commandé par une énergie motrice, fonction de l'état de charge et/ou de la vitesse de la remorque ou du véhicule de sorte que si la charge et/ou la vitesse de la remorque augmente(nt), l'amortissement des mouvements de lacet augmente et inversement ;
**caractérisé en ce que**:
le véhicule est un camion, au moins du camion ou de la remorque tractée est à suspensions pneumatiques
et **en ce que** l'on utilise comme énergie motrice de l'actionneur (27), le fluide des suspensions de la remorque et/ou du camion.

2. Dispositif d'amortissement selon la revendication précédente **caractérisé en ce que** le fluide moteur de l'actionneur (27) est pris directement par piquage sur la conduite d'alimentation en fluide des suspensions de la remorque et/ou du camion.

3. Dispositif d'amortissement selon l'une quelconque des revendications précédentes **caractérisé en ce que** le fonctionnement de l'actionneur (27) est commandé par une boucle d'asservissement en fonction de la pression des suspensions de la remorque et/ou du camion.

4. Dispositif d'amortissement selon l'une quelconque des revendications précédentes **caractérisé en ce que** le fonctionnement de l'actionneur (27) est commandé par une boucle d'asservissement en fonction du niveau de charge de la remorque.

5. Dispositif d'amortissement selon la revendication 1 ou 2 **caractérisé en ce que** le fonctionnement de l'actionneur (27) est commandé par une boucle d'asservissement en fonction de la pression des suspensions de la remorque et/ou du camion et de la vitesse du véhicule.

6. Dispositif d'amortissement selon la revendication 1 ou 2 **caractérisé en ce que** le fonctionnement de l'actionneur (27) est commandé par une boucle d'asservissement en fonction de la vitesse du véhicule.

7. Dispositif d'amortissement selon la revendication 5 ou 6 **caractérisé en ce que** les valeurs de la vitesse du véhicule ne sont prises en compte pour l'amortissement des mouvements de lacet qu'au delà d'un seuil.

8. Dispositif d'amortissement selon l'une quelconque des revendications de 3 à 5 **caractérisé en ce que** l'actionneur (27) est commandé par l'intermédiaire d'un moyen sensible à la pression régnant dans la conduite d'alimentation en fluide des suspensions de la remorque et/ou du camion.

9. Dispositif d'amortissement selon la revendication 5 ou 6 **caractérisé en ce que** l'actionneur (27) est commandé par l'intermédiaire d'un moyen sensible à la vitesse du véhicule.

10. Dispositif d'amortissement selon l'une quelconque des revendications précédentes **caractérisé en ce que** la piste d'amortissement (4) est une lame en un matériau flexible fixée par ses extrémités à l'arrière du camion.

11. Dispositif d'amortissement selon l'une quelconque des revendications précédentes **caractérisé en ce que** le dispositif de friction (17) est fixé sur la face supérieure de l'extrémité avant (16) du timon (2).

12. Dispositif d'amortissement selon l'une quelconque des revendications précédentes **caractérisé en ce que** la piste (4) d'amortissement présente un revêtement de friction.

13. Dispositif d'amortissement selon l'une quelconque des revendications précédentes **caractérisé en ce que** la piste (4) d'amortissement, présente deux faces opposées (14) et (15) parallèles et sensiblement parallèles au timon (2) ou à la route, et **en ce que** le dispositif de friction (17) est du type à pincement.

14. Dispositif d'amortissement selon la revendication précédente **caractérisé en ce que** le dispositif de friction (17) à pincement comporte des mâchoires (23) et (24) portant des patins ou des plaquettes (21, 22) contraints en rapprochement de contact puis de pincement avec les faces planes (14, 15) de la piste (4) d'amortissement par l'actionneur (27).

15. Dispositif d'amortissement selon l'une quelconque des revendications précédentes **caractérisé en ce que** l'épaisseur de la piste (4) est variable vers ses extrémités.

16. Dispositif d'amortissement selon l'une quelconque des revendications précédentes **caractérisé en ce que** l'actionneur (27) est à énergie pneumatique.

17. Dispositif d'amortissement selon l'une quelconque des revendications précédentes **caractérisé en ce que** l'actionneur (27) est une chambre à air.

18. Dispositif d'amortissement selon la revendication précédente **caractérisé en ce que** l'actionneur (27) est un soufflet comportant un ou plusieurs lobes.

19. Dispositif d'amortissement selon la revendication précédente **caractérisé en ce que** le soufflet est un soufflet de suspension pneumatique d'un véhicule routier.

20. Dispositif d'amortissement selon la revendication 16 **caractérisé en ce que** l'actionneur (27) est un vérin pneumatique.

21. Dispositif d'amortissement selon l'une quelconque des revendications précédentes **caractérisé en ce que** les différents éléments constitutifs du dispositif de friction (17) sont empilés les uns sur les autres à la manière d'un sandwich de part et d'autre de la piste (4) et maintenus ensemble par un ou plusieurs organes de fixation, par exemple des tiges (30), cette disposition permettant un démontage facile après annulation ou diminution de la force de rapprochement générée par l'actionneur (27).

22. Dispositif d'amortissement selon l'une quelconque des revendications précédentes **caractérisé en ce que** l'ensemble de ses moyens constitue un tout mécanique fonctionnel sous la forme d'un bloc constructif unique selon lequel sont rassemblés sur l'extrémité avant (16) du timon (2), la piste (4) d'amortissement, le dispositif de friction (17) fixé ou à fixer sur le timon et une interface mécanique reliant les deux extrémités de la piste d'amortissement (4) et sur laquelle les extrémités des prolongations de la piste d'amortissement (4) sont fixées ou articulées.

## Claims

1. A device for damping yaw in the trailer of a highway vehicle consisting of a vehicle and a trailer drawn by said vehicle, using friction as the basis of the damping effect, and near the front extremity (16) of the drawbar (2) there is provided a damping unit formed of the following elements :
. a curvilinear damping track (4) centered on the coupling (3) but separate from it, said damping track (4) or its support being connected so as to absorb yaw and pitch to a support integral with the rear of the vehicle drawing the trailer or to an intermediate support attached to a fixed portion of the rear of the vehicle ;
. a friction device (17) integral with the drawbar (2) comprising friction means (21,22) which are forced against the surfaces of the damping track (4) by an actuator (27) which degrades the energy by rubbing against the track (4) so as to obtain a damping yaw movements effect ;
. the actuator (27) acting upon the friction devices is driven by energy dependent upon either the cargo and/or the speed of the trailer or the vehicle such that if either the cargo and/or the vehicle speed increases, yaw damping increases, and vice versa ;
**characterized in that** :
. the vehicle is a truck, and at least one of the truck or the drawn trailer has a pneumatic suspension system,
. and **in that** the energy used to drive the actuator (27) is the suspension system fluid in the truck and/or the trailer.

2. A damping device according to the preceding claim **characterized in that** the fluid used to drive the actuator (27) is derived directly by tapping the fluid supply conduit to the suspension system of the trailer and/or the truck.

3. A damping device according to any one of the preceding claims **characterized in that** operation of the actuator (27) is governed by a control loop dependent upon suspension pressure in the trailer and/or the truck.

4. A damping device according to any one of the preceding claims **characterized in that** operation of the actuator (27) is governed by a control loop dependent upon the extent to which the trailer is loaded.

5. A damping device according to claim 1 or 2 **characterized in that** operation of the actuator (27) is governed by a control loop dependent upon suspension pressure in the trailer and/or the truck and vehicle speed.

6. A damping device according to claim 1 or 2 **characterized in that** operation of the actuator (27) is governed by a control loop dependent upon vehicle speed.

7. A damping device according to claim 5 or 6 **characterized in that** the speed of the vehicle is used to form the basis for yaw damping only if it exceeds a certain threshold.

8. A damping device according to any one of claims 3 through 5 **characterized in that** the actuator (27) is governed using a device that is sensitive to the pressure prevailing in the conduit supplying suspension fluid to the trailer and/or the truck.

9. A damping device according to claim 5 or 6 **characterized in that** the actuator (27) is governed by a device that is sensitive to the speed of the vehicle.

10. A damping device according to any one of the preceding claims **characterized in that** the yaw-damping track (4) is a blade made of flexible material affixed by its extremities to the rear of the truck.

11. A damping device according to any one of the preceding claims **characterized in that** the friction device (17) is attached to the upper surface of the front extremity (16) of the drawbar (2).

12. A damping device according to any one of the preceding claims **characterized in that** the damping track (4) has a friction coating.

13. A damping device according to any one of the preceding claims **characterized in that** the damping track (4) has two parallel opposing surfaces (14) and (15) which are generally parallel to the drawbar (2) or to the road, and **in that** the friction device (17) is a gripping device.

14. A damping device according to any one of the preceding claims **characterized in that** the gripping friction device (17) comprises brake shoes (23) and (24) with slides or plates (21,22) which are forced together until they contact and then grip the flat surfaces (14,15) of the yaw-damping track (4) by the actuator (27).

15. A damping device according to any one of the preceding claims **characterized in that** the thickness of the track (4) varies near the extremities.

16. A damping device according to any one of the preceding claims **characterized in that** the actuator (27) uses pneumatic energy.

17. A damping device according to any one of the preceding claims **characterized in that** the actuator (27) is an air chamber.

18. A damping device according to any one of the preceding claims **characterized in that** the actuator (27) is a bellows consisting of one or more lobes.

19. A damping device according to the preceding claim **characterized in that** the bellows is a pneumatic suspension bellows of a road vehicle.

20. A damping device according to claim 16 **characterized in that** the actuator (27) is a pneumatic cylinder.

21. A damping device according to any one of the preceding claims **characterized in that** the various elements constituting the friction device (17) are layered one on top of the other like a sandwich on either side of the track (4) and held together by one or more attachment devices, for example, rods (30), an arrangement which facilitates detachment after the force of the actuator (27) pushing them together has been nullified or diminished.

22. A damping device according to any one of the preceding claims **characterized in that** the unit it forms constitutes a completely mechanical unit in the form of a single constructive block in which the following elements are assembled on the front extremity (16) of the drawbar (2) : the damping track (4), the friction device (17) that is affixed or will be affixed to the drawbar, and a mechanical interface joining the two extremities of the damping track (4) to which the ends of the extension of track (4) are affixed or articulated.

## Patentansprüche

1. Vorrichtung zur Dämpfung der Schlingerbewegungen des Anhängers von einem Lastzug, der aus einem Kraftfahrzeug und einem von diesem gezogenen Anhänger besteht, der in der Umgebung des vorderen Endes (16) der Deichsel (2) über eine Dämpfungseinheit verfügt, welche die Reibung als Dämpfung benutzt und aus Folgendem gebildet wird:
. Eine kurvilineare Dämpfungsschiene (4), die zur Anhänge-Kupplung (3) mittig ausgerichtet, aber von dieser getrennt ist, die Dampfungsschiene (4) oder ihre Auflage ist derart mit einem Halter am hinteren Teil des Kraftfahrzeugs oder einem Zwischenstück, das an einem feststehenden Teil am hinteren Kraftfahrzeugende montiert ist, verbunden, dass sie Wank- und Stampfbewegungen dämpft;
. eine mit der Deichsel (2) verbundene Reibungsvorrichtung (17) mit den Reibungsgebilden (21, 22), die durch ein Stellglied (27) gegen die Flächen der Dämpfungsschiene (4)gepresst werden, um eine Dämpfungswirkung der Schlingerbewegungen zu erzielen, indem die Energie durch Reiben auf den Reibungsgebilden abgebaut wird; das auf die Reibungsstrukturen einwirkende Stellglied (27) wird, in Abhängigkeit des Ladungszustands und/oder der Geschwindigkeit des Anhängers oder des Kraftfahrzeuges, von einer Antriebskraft derart gesteuert, dass bei zunehmender Last und/oder Geschwindigkeit des Anhängers die Dämpfung der Schlingerbewegungen zunimmt und umgekehrt;
**dadurch gekennzeichnet, dass**:
. das Kraftfahrzeug ein Lastkraftwagen ist, wobei wenigsten der Lastkraftwagen oder der gezogene Anhänger eine Luftfederung besitzt,
. und **dadurch**, dass als Antriebskraft für das Stellglied (27) das Fluid für die Federung des Anhängers und/oder des Lastkraftwagens benutzt wird.

2. Dämpfungsvorrichtung nach vorhergehendem Anspruch, **dadurch gekennzeichnet, dass** das Antriebsfluid für das Stellglied (27) direkt von der Zufuhrleitung für das Fluid der Federung des Anhängers und/oder des Lastkraftwagens durch Abzweigung entnommen wird.

3. Dämpfungsvorrichtung nach einem der vorhergehenden Ansprüche, **dadurch gekennzeichnet, dass** der Betrieb für das Stellglied (27) von einem Regelkreis, in Abhängigkeit des Drucks der Federung für den Anhänger und/oder den Lastkraftwagen, gesteuert wird.

4. Dämpfungsvorrichtung nach einem der vorhergehenden Ansprüche, **dadurch gekennzeichnet, dass** der Betrieb für das Stellglied (27) von einem Regelkreis, in Abhängigkeit des Lastniveaus des Anhängers, gesteuert wird.

5. Dämpfungsvorrichtung nach einem der Ansprüche 1 oder 2, **dadurch gekennzeichnet, dass** der Betrieb für das Stellglied (27) von einem Regelkreis, in Abhängigkeit des Drucks der Federung für den Anhänger und/oder den Lastkraftwagen, gesteuert wird.

6. Dämpfungsvorrichtung nach einem der Ansprüche 1 oder 2, **dadurch gekennzeichnet, dass** der Betrieb für das Stellglied (27) von einem Regelkreis, in Abhängigkeit der Kraftfahrzeuggeschwindigkeit, gesteuert wird.

7. Dämpfungsvorrichtung nach einem der Ansprüche 5 oder 6, **dadurch gekennzeichnet, dass** die Werte der Fahrzeuggeschwindigkeit nur über einen Schwellwert hinaus für die Dämpfung berücksichtigt werden.

8. Dämpfungsvorrichtung nach einem der vorhergehenden Ansprüche 3 bis 5, **dadurch gekennzeichnet, dass** das Stellglied (27) mithilfe eines auf Druck reagierenden Mittels gesteuert wird, das sich in der Zuführungsleitung des Fluids für die Federung des Anhängers und/oder des Lastkraftwagens befindet.

9. Dämpfungsvorrichtung nach einem der Ansprüche 5 oder 6, **dadurch gekennzeichnet, dass** das Stellglied (27) mithilfe eines auf die Kraftfahrzeuggeschwindigkeit reagierenden Mittels gesteuert wird.

10. Dämpfungsvorrichtung nach einem der vorstehenden Ansprüche, **dadurch gekennzeichnet, dass** die Dämpfungsschiene (4) ein Streifen aus biegsamen Material ist, der mit seinen Enden am hinteren Teil des Lastkraftwagens befestigt ist.

11. Dämpfungsvorrichtung nach einem der vorstehenden Ansprüche, **dadurch gekennzeichnet, dass** die Reibungsvorrichtung (17) an der Oberseite des vorderen Endes (16) der Deichsel (2) montiert ist.

12. Dämpfungsvorrichtung nach einem der vorstehenden Ansprüche, **dadurch gekennzeichnet, dass** die Schiene (4) zur Dämpfung einen Reibungsbelag aufweist.

13. Dämpfungsvorrichtung nach einem der vorstehenden Ansprüche, **dadurch gekennzeichnet, dass** die Schiene (4) zur Dämpfung aus zwei parallelen, gegenüberliegenden Flächen (14) und (15) besteht und etwa parallel zur Deichsel (2) oder zur Straße liegt und **dadurch**, dass die Reibungsvorrichtung (17) eine Quetschvorrichtung ist.

14. Dämpfungsvorrichtung nach vorhergehendem Anspruch, **dadurch gekennzeichnet, dass** die Quetsch-Reibungsvorrichtung (17) die Backen (23) und (24) aufweist, welche die Reibungsträger oder Platten (21, 22) tragen, die durch Zwangsannäherung vom Stellglied (27) zum Kontakt und dann zur Quetschung der planen Flächen (14, 15) der Dämpfungsschiene (4) gezwungen werden.

15. Dämpfungsvorrichtung nach einem der vorstehenden Ansprüche, **dadurch gekennzeichnet, dass** die Dicke der Schiene (4) zu ihren Enden hin veränderlich ist.

16. Dämpfungsvorrichtung nach einem der vorstehenden Ansprüche, **dadurch gekennzeichnet, dass** das Stellglied (27) mit Luftdruckkraft arbeitet.

17. Dämpfungsvorrichtung nach einem der vorstehenden Ansprüche, **dadurch gekennzeichnet, dass** das Stellglied (27) eine Luftkammer ist.

18. Dämpfungsvorrichtung nach einem der vorstehenden Ansprüche, **dadurch gekennzeichnet, dass** das Stellglied (27) ein Balg ist, der eine oder mehrere Falten hat.

19. Dämpfungsvorrichtung nach einem der vorstehenden Ansprüche, **dadurch gekennzeichnet, dass** der Balg ein Federbalg für die Luftfederung von Straßenfahrzeugen ist.

20. Dämpfungsvorrichtung nach einem der vorstehenden Ansprüche, **dadurch gekennzeichnet, dass** das Stellglied (27) ein Pneumatikzylinder ist.

21. Dämpfungsvorrichtung nach einem der vorstehenden Ansprüche, **dadurch gekennzeichnet, dass** die verschiedenen Bauteile der Reibungsvorrichtung (17) beidseitig der Schiene (4), wie ein Sandwich, eins über dem anderen aufgesetzt sind und von einem oder mehreren Befestigungsmechanismen, zum Beispiel Stifte (30), zusammengehalten werden, sodass diese Anordnung, nach Aufhebung oder Verringerung der von dem Stellglied (27) erzeugten Annäherungskraft, eine leichte Demontage gewährleistet.

22. Dämpfungsvorrichtung nach einem der vorstehenden Ansprüche, **dadurch gekennzeichnet, dass** die Gesamtheit dieser Mittel ein funktionelles mechanisches Ganzes bildet, in Form einer einzigen konstruktiven Funktionsgruppe, nach der auf dem vorderen Teil (16) der Deichsel (2) die Dämpfungsschiene (4) und die Reibungsvorrichtung (17), befestig oder auf die Deichsel montierbar, zusammengefügt sind und eine mechanische Verbindungsstelle, welche die zwei Enden der Dämpfungsschiene (4) verbindet und an der die Enden der Verlängerungen der Dämpfungsschiene (4) befestigt oder gelenkig angebracht sind.
